# EUROPÄISCHE PATENTSCHRIFT

(11) **EP 3 662 733 B1**
(45) Veröffentlichungstag und Bekanntmachung des Hinweises auf die Patenterteilung: **24.11.2021**
(21) Anmeldenummer: 19213185.2
(22) Anmeldetag: 03.12.2019
(51) Int. Cl.: A01C 7/08, A01C 7/12, A01C 19/02

(54) **LANDWIRTSCHAFTLICHE VERTEILMASCHINE UND DOSIEREINRICHTUNG FÜR EINE LANDWIRTSCHAFTLICHE VERTEILMASCHINE**
AGRICULTURAL DISTRIBUTION MACHINE AND DOSING DEVICE FOR AGRICULTURAL DISTRIBUTOR
MACHINE D'ÉPANDAGE AGRICOLE ET DISPOSITIF DE DOSAGE POUR UNE MACHINE D'ÉPANDAGE AGRICOLE

(30) Priorität: 05.12.2018 DE 102018131069
(43) Veröffentlichungstag der Anmeldung: 10.06.2020
(73) Patentinhaber: Horsch Maschinen GmbH, 92421 Schwandorf (DE)
(72) Erfinder: PIRKENSEER, Michael, 92421 Schwandorf (DE)
(74) Vertreter: Benninger, Johannes

(56) Entgegenhaltungen:
- WO-A1-97/00603
- DE-A1-102017 005 093
- US-A1- 2013 192 503
- US-A1- 2015 216 109
- US-A1- 2016 120 097

## Beschreibung

Die vorliegende Erfindung betrifft eine Dosiereinrichtung zur Dosierung von granularem Verteilgut, wie bspw. Saatgut, Dünger oder dergleichen für eine landwirtschaftliche Verteilmaschine sowie eine landwirtschaftliche Verteilmaschine mit den Merkmalen der unabhängigen Ansprüche.

Um körnige bzw. granulare landwirtschaftliche Verteilgüter, wie Saatgut, Dünger oder dergl. in einer gewünschten Menge über eine Ackerfläche oder einem Pflanzenbestand auszubringen, ist es erforderlich, diese entsprechend in gewünschten bzw. steuer- und/oder regelbaren Mengen zu dosieren. Zur Dosierung von granularen landwirtschaftlichen Verteilgüter sind im Stand der Technik verschiedene Verfahren bzw. Systeme bekannt.

Zur Dosierung von landwirtschaftlichen Verteilgüter sind gemäß einem ersten System Einzelkorndosiersysteme bekannt, bei welchen das jeweilige Verteilgut vereinzelt wird, so dass jeweils nur ein "vereinzeltes" Korn insbesondere in eine mittels eines Säschar erzeugte Saatfurche abgelegt wird. Die Vereinzelung der landwirtschaftlichen Verteilgüter kann gemäß WO 2010/059101 A1 beispielsweise mittels eines Differenzdruckes oder gemäß WO 2013/186175 A1 mittels Zentrifugalkräften erfolgen.

Im Stand der Technik sind weiterhin Systeme bekannt, welche auf dem Prinzip des volumetrischen Dosierens von Verteilgut basieren. Bei derartigen Dosiersystemen wird das Verteilgut in der Regel mittels einer Zellenradschleuse in volumetrischer Weise dosiert, anschließend beispielsweise mittels einer Verteileinheit verteilt sowie jeweils mittels eines Säschars insbesondere in die durch das Säschar erzeugte Saatfurche abgelegt. Ein derartiges System ist beispielsweise durch die WO 97/00603 A1 beschrieben. Die genannte PCT-Anmeldung offenbart eine Sävorrichtung mit modularem Dosiergerät. Hierbei ist jeweils in einem Gehäuse ein sog. Zellenrotor vorgesehen. In Abhängigkeit des jeweiligen Verteilguts, der gewünschten Ausbringmenge sowie der Fahrgeschwindigkeit der Maschine können in das Gehäuse jeweils verschiedene Rotoren eingelegt werden. Die Rotoren können jeweils mittels einer Antriebseinheit bspw. in Form eines Elektromotors mit verschiedensten Antriebsdrehzahlen etc. betrieben werden.

Dem Gehäuse bzw. dem Rotor kann jeweils eine sog. "Einfach- und/oder Doppelfallschleuse" nachgeordnet werden. In der Fallschleuse ist in der Regel ein von einer Strömungserzeugungseinrichtung, z.B. in Form eines Radialgebläses, Zentrifugalgebläses oder dergl. erzeugter Luftvolumenstrom vorhanden, mittels welchem das Verteilgut anschließend in Richtung einer Verteileinheit und von dieser in Richtung zu den Säscharen gefördert wird.

In einer weiteren Ausführungsvariante könnte dem Gehäuse ein sog. Injektor nachgeordnet werden, in welchem wiederum ein Luftvolumenstrom anliegt.

Um die Verteilung von Verteilgut an einzelnen Maschinenabschnitten abzuschalten bzw. um sog. Teilbreiten zu aktivieren oder zu deaktivieren war bislang je Teilbreite der landwirtschaftlichen Verteilmaschine eine Dosiervorrichtung erforderlich, wie es beispielsweise durch die WO 97/00603 A1 offenbart ist. Dies hat jedoch mitunter zur Folge, dass die jeweiligen Ausläufe eines Vorratsbehälters entsprechend viel Bauraum benötigen. Dies geht beispielsweise auch durch die US 2012/0174844 A1 hervor.

Eine weitere Ausführungsform gemäß der Patentanmeldung WO 97/00603 A1 zeigt die Verwendung einer Dosiereinrichtung, welcher eine Doppelfallschleuse oder ein Doppelinjektor nachgeordnet ist, von denen jeweils ein Abgang verschließbar ist. Neben einer Aktivierung und/oder Deaktivierung der Verteilung des Verteilguts an einzelnen Teilbreiten ist es bei dem durch WO 97/00603 A1 aufgezeigten Ausführungsbeispiel nicht möglich, die Ausbringmenge an einzelnen Teilbreiten unabhängig von anderen Teilbreiten zu erhöhen oder zu verringern, da jeweils nur mittels eines Rotors Verteilgut dosiert werden kann.

Aus der DE 10 2017 005093 A1 ist ein Verfahren zum Ausbringen von Verteilgut mittels einer pneumatischen Verteilmaschine bekannt. Die vorgesehene Verteilmaschine umfasst ein Dosierorgan mit einer in einem Dosiergehäuse gelagerten, rotierbar angetriebenen Dosierwalze zur Dosierung des Verteilgutes. Die Dosierwalze eines jeden Dosierorgans umfasst eine Anzahl an Förderleitungen, welche von dem Dosierorgan versorgt werden, entsprechend der Anzahl an von Dosierradsegmenten gebildeten Axialabschnitten. Die Dosierradsegmente sind unabhängig voneinander rotierbar angetrieben. Jedem Dosierradsegment kann ein Positionserfassungssensor zugeordnet sein, welcher ebenso wie die Antriebe mit Steuermodulen einer Steuer- und/oder Regeleinrichtung der Verteilmaschine in Wirkverbindung steht, um die einzelnen Dosierradsegmente der Dosierwalzender Dosierorgane unabhängig voneinander drehzahlsteuern und/oder - regeln zu können.

Die US 2013/192503 A1 zeigt ein Abgabesystem für partikelförmiges Material zur sektionalen Steuerung einer Abgaberate. In einem Gehäuse sind einzelne Dosiereinheiten angeordnet, welche einzeln von getrennten Antriebsmaschinen angetrieben werden, so dass einzelne Dosierwalzen der einzelnen Dosiereinheiten jeweils mit variablen Geschwindigkeiten gedreht werden können. Die Dosierwalze jeder Dosiereinheit ist zwischen dem Einlass und dem Auslass angeordnet und kann von einer Welle getragen werden, die sich konzentrisch durch die Dosierwalze erstreckt.

Angesichts der im Stand der Technik genannten Nachteile liegt der Erfindung daher die Aufgabe zugrunde, eine Dosiereinrichtung für eine landwirtschaftliche Verteilmaschine sowie eine landwirtschaftliche Verteilmaschine zur Verfügung zu stellen, bei welcher eine vereinfachte Aktivierung und/oder Deaktivierung von Teilbreiten durchführbar ist und mittels welcher die Verteilmenge je Teilbreite unabhängig voneinander variierbar bzw. steuerbar und/oder regelbar ist.

Diese Aufgaben der Erfindung werden durch eine Dosiereinrichtung für eine landwirtschaftliche Verteilmaschine sowie durch eine landwirtschaftliche Verteilmaschine zum Ausbringen von granularem Verteilgut mit den Merkmalen des unabhängigen Anspruchs gelöst. Vorteilhafte Ausgestaltungen und Weiterbildungen der Erfindung sind in den jeweils abhängigen Ansprüchen angegeben.

Die Erfindung betrifft eine Dosiereinrichtung zur insbesondere volumetrischen Dosierung von granularem Verteilgut, wie beispielsweise Saatgut und/oder Dünger für eine landwirtschaftliche Verteilmaschine bzw. zur Verwendung in einer landwirtschaftlichen Verteilmaschine. Bei der landwirtschaftlichen Verteilmaschine kann es sich insbesondere um Sämaschinen und/oder pneumatisch arbeitenden Düngerstreuern handeln.

Die Dosiereinrichtung ist durch eine rotierende Zellenwalze oder Dosierwalze ausgebildet. Insbesondere kann die Dosiereinrichtung als Zellenradschleuse ausgebildet sein.

Die rotierende Zellenwalze oder Dosierwalze kann insbesondere eine zylindrische Mantelfläche umfassen, in welcher Öffnungen mit einer definierten Größe und/oder definiertem Querschnitt und/oder Vertiefungen vorgesehen sind. Die Größe und/oder der Querschnitt der Öffnungen können unterschiedlich ausgebildet sein. Je nach Größe der Öffnungen und/oder des Querschnittes kann die Menge aus einer Speichereinheit zu entnehmenden Verteilgut variiert werden. In der Regel kann gelten, dass bei Öffnungen mit einem großen Querschnitt eine höhere Menge an Verteilgut aus einer Speichereinheit entnommen werden kann, als bei Öffnungen mit einem kleinen Querschnitt. Insbesondere kann auch die Anzahl an Öffnungen in der Mantelfläche variieren.

Erfindungsgemäß ist die rotierende Zellenwalze oder Dosierwalze zumindest zweigeteilt. Zudem ist vorgesehen, dass jeder der wenigstens zwei Abschnitte der rotierenden Zellenwalze oder Dosierwalze in eine separate Verbindungsleitung eines zu zwei oder mehr Verteileinheiten führenden Leitungssystems mündet.

Die zweigeteilte Zellenwalze oder Dosierwalze kann identisch ausgebildet sein und jeweils eine Mantelfläche mit gleichen Vertiefungen und/oder Öffnungen mit gleichem Querschnitt oder dergleichen aufweisen. Alternativ können die rotierenden Zellenwalzen oder Dosierwalzen unterschiedlich ausgebildet sein und unterschiedliche Vertiefungen und/oder Öffnungen mit unterschiedlichem Querschnitt oder dergleichen aufweisen. Insbesondere können sich die rotierenden Zellenwalzen oder Dosierwalzen in der Anzahl an Vertiefungen und/oder Öffnungen unterscheiden.

Jeder der wenigstens zwei Abschnitte der rotierenden Zellenwalze oder Dosierwalze verfügt über eine eigene Antriebseinheit zur jeweils voneinander unabhängigen Antriebsdrehzahlsteuerung.

Es kann insbesondere vorgesehen sein, dass die wenigstens zwei Abschnitte der rotierenden Zellenwalze oder Dosierwalze in zumindest einem Gehäuse rotierend angeordnet sind und/oder rotierend gelagert sind; d.h. die erfindungsgemäße Dosiereinrichtung kann sich insbesondere durch einen zweigeteilten Aufbau auszeichnen, welche Dosiereinrichtung in einem, insbesondere gemeinsamen, Gehäuse gelagert ist.

Wenn nachfolgend von wenigstens zwei Abschnitten der rotierenden Zellenwalze oder Dosierwalze die Rede ist, so soll damit der zweiteilige Aufbau der rotierenden Zellenwalze oder Dosierwalze, insbesondere deren Mantelfläche sowie Antriebswellen umfasst sein. Bei den Antriebseinheiten kann es sich im weitesten Sinne jeweils um separate bzw. externe Komponenten handeln.

Weiter kann es vorgesehen sein, dass die wenigstens zwei Abschnitte der rotierenden Zellenwalze oder Dosierwalze zumindest näherungsweise gleiche Abmessungen aufweisen und/oder ausbilden. Aufgrund der zumindest näherungsweisen gleichen Abmessungen kann es ermöglicht werden, dass die wenigstens zwei Abschnitte der rotierenden Zellenwalze oder Dosierwalze in einem insbesondere gemeinsamen Gehäuse rotierend gelagert werden können. Insbesondere können die wenigstens zwei Abschnitte der rotierenden Zellenwalze oder Dosierwalze bzw. die Antriebswellen der der rotierenden Zellenwalze oder Dosierwalze die gleiche Breite aufweisen.

Insbesondere können die wenigstens zwei Abschnitte der rotierenden Zellenwalze oder Dosierwalze eine bauliche Einheit bilden, welche jeweils in ein insbesondere gemeinsames Gehäuse einsetzbar sind.

Alternativ können die wenigstens zwei Abschnitte der rotierenden Zellenwalze oder Dosierwalze unterschiedliche Abmessungen aufweisen, wobei die wenigstens zwei Abschnitte dennoch derart ausgebildet sind, dass diese in einem insbesondere gemeinsamen Gehäuse einsetzbar bzw. integrierbar sind.

Weiter kann es vorgesehen sein, dass die wenigstens zwei Abschnitte der rotierenden Zellenwalze oder Dosierwalze jeweils eine Antriebswelle umfassen, deren Achsen fluchtend zueinander angeordnet und/oder ausgerichtet sind. Die Antriebswellen der wenigstens zwei Abschnitte der rotierenden Zellenwalze oder Dosierwalze können insbesondere beabstandet zueinander angeordnet sein, wobei insbesondere die Stirnseiten am freien Ende der Antriebswellen zueinander beabstandet angeordnet sind.

Weiter kann es vorgesehen sein, dass den Antriebswellen der wenigstens zwei Abschnitte der rotierenden Zellenwalze oder Dosierwalze jeweils die zumindest eine Antriebseinheit zugeordnet ist. Bei den Antriebseinheiten kann es sich insbesondere um elektrische und/oder hydraulische Antriebsmotoren oder dergleichen handeln. Damit kann erreicht werden, dass jeder Abschnitt der rotierenden Zellenwalze oder Dosierwalze bzw. jede Antriebswelle unabhängig voneinander antriebbar ausgebildet sind.

Weiter kann es vorgesehen sein, dass die Antriebseinheiten der wenigstens zwei Abschnitte der rotierenden Zellenwalze oder Dosierwalze jeweils unabhängig voneinander regelbar ausgebildet sind. Dadurch können die wenigstens zwei Abschnitte, insbesondere die Antriebswellen, der rotierenden Zellenwalze oder Dosierwalze unabhängig voneinander betrieben werden, wodurch eine variable Anpassung der ausgebrachten Menge an Verteilgut erreicht werden kann.

Insbesondere kann es denkbar sein, dass die Antriebswellen bzw. die Antriebseinheiten der wenigstens zwei Abschnitte der rotierenden Zellenwalze oder Dosierwalze mit unterschiedlicher Drehzahl oder mit gleicher Drehzahl betrieben werden können.

Weiter kann es vorgesehen sein, dass die Antriebseinheiten der wenigstens zwei Abschnitte der rotierenden Zellenwalze oder Dosierwalze eine unterschiedliche Drehrichtung aufweisen und/oder entgegengesetzt rotierbar ausgebildet sind. Dementsprechend können die Antriebswellen der wenigstens zwei Antriebseinheiten der wenigstens zwei Abschnitte entgegengesetzt rotieren.

Weiter kann es vorgesehen sein, dass zumindest eine Antriebseinheit der wenigstens zwei Abschnitte der rotierenden Zellenwalze oder Dosierwalze einseitig abschaltbar ist. So wäre es beispielsweise denkbar, dass eine Antriebseinheit aktiviert ist und infolgedessen eine Zellenwalze oder Dosierwalze rotiert, während hingegen die andere Antriebseinheit deaktiviert ist und ruht.

Gemäß einem weiteren Aspekt der erfindungsgemäßen Dosiereinrichtung kann die Antriebseinheit auch aus einem Antriebsmotor und einer Übertragungseinheit zusammengesetzt sein, wobei jeweils ein Abschnitt der rotierenden Zellenwalze oder Dosierwalze mittels des Antriebsmotors betreibbar sein kann und die jeweilige Bewegung des Antriebsmotors bzw. des Abschnitts der rotierenden Zellenwalze oder Dosierwalze auf den anderen Abschnitt der rotierenden Zellenwalze oder Dosierwalze mittels der Übertragungseinheit mit gleicher oder unterschiedlicher Drehzahl übertragbar sein kann. Die Übertragungseinheit kann bspw. durch ein Getriebe gebildet sein. Zudem kann die Übertragungseinheit derartig ausgeführt sein, dass mittels dieser die Drehzahl des nicht mittels eines Antriebsmotors angetriebenen Abschnitts der rotierenden Zellenwalze oder Dosierwalze unterschiedlich zur Drehzahl des mittels eines Antriebsmotors angetriebenen Abschnitts der rotierenden Zellenwalze oder Dosierwalze sein kann. Auch kann die Übertragungseinheit derartig sein, dass eine Bewegungsübertragung der zwei Abschnitte der Zellenwalze oder Dosierwalze aktiviert oder deaktiviert werden kann.

Weiter kann es vorgesehen sein, dass die wenigstens zwei Abschnitte der rotierenden Zellenwalze oder Dosierwalze über zumindest eine Lagerwelle miteinander verbunden sind. Die zumindest eine Lagerwelle kann insbesondere jeweils zwischen den freien Enden bzw. zwischen den Stirnseiten der Antriebswellen angeordnet sein, wobei eine Achse der zumindest einen Lagerwelle zumindest näherungsweise fluchtend zu den Achsen der Antriebswellen angeordnet und/oder ausgerichtet ist; d.h. die Achsen der Antriebswellen der wenigstens zwei Abschnitte der rotierenden Zellenwalze oder Dosierwalze und der zumindest einen Lagerwelle können zumindest näherungsweise auf einer Ebene liegen. Aufgrund dessen kann die Lagerung der wenigstens zwei Abschnitte der rotierenden Zellenwalze oder Dosierwalze, insbesondere der Antriebswellen, im Gehäuse verbessert werden.

Die zumindest eine Lagerwelle kann dazu dienen, die Dosiereinrichtung in Form einer rotierende Zellenwalze oder Dosierwalze zweiteilig auszubilden.

Durch das in der Speichereinheit mitgeführte und bereitgestellte Verteilgut werden Biegemomente auf die Dosiereinrichtung erzeugt. Um diese Biegemomente aufnehmen zu können, ist es im Stand der Technik bspw. gemäß WO 97/00603 A1 erforderlich, eine zweiseitige Lagerung bzw. zweischnittige Lagerung in einem Gehäuse der Antriebseinheit, insbesondere der Antriebswelle, in einem Gehäuse vorzusehen. Durch die in der genannten Patentanmeldung beschriebene Lagerung ist es jedoch nicht möglich, die Antriebseinheit in zwei Einzelsegmente, welche unabhängig voneinander aktivier- und/oder deaktivierbar sind, zu unterteilen.

Die zumindest eine Lagerwelle kann zumindest einem Abschnitt, insbesondere einer Antriebswelle, der rotierenden Zellenwalze oder Dosierwalze fest zugeordnet sein und gegenüber dem anderen Abschnitt, insbesondere gegenüber der anderen Antriebswelle, der rotierenden Zellenwalze oder Dosierwalze drehbar gelagert sein. Hierfür kann zwischen der jeweiligen Antriebswelle und der zumindest einen Lagerwelle eine separate Lagereinheit bzw. Lagerung vorgesehen sein.

Um diese Lagereinheit, insbesondere die zumindest eine Lagerwelle, vor Schmutz oder dergleichen zu schützen, kann zudem zumindest ein Dichtelement vorgesehen sein. Das zumindest eine Dichtelement kann beispielsweise in Form eines Radialwellendichtrings oder dergleichen ausgebildet sein.

Die zumindest eine Lagerwelle kann insbesondere derartig ausgebildet sein, dass die durch das oberhalb der Dosiereinrichtung befindliche Verteilgut hervorgerufene Biegung besser aufgenommen werden kann. Insbesondere kann die zumindest eine Lagerwelle derartig ausgebildet sein, dass Radialkräfte aufgenommen werden können, Aufgrund dessen kann auf zusätzliche Lagerelemente, insbesondere auf Festlager, wie beispielsweise das Gehäuse, an der Trennstelle der wenigstens zwei Abschnitte der rotierenden Zellenwalze oder Dosierwalze verzichtet werden.

Gemäß der erfindungsgemäßen Dosiereinrichtung sind die Antriebseinheiten bzw. die Antriebswellen jeweils einseitig gelagert; insgesamt jedoch können die Antriebswellen zweischnittig im Gehäuse gelagert sein, ohne dass hierfür das Gehäuse entsprechend angepasst und/oder geändert werden muss.

Weiter kann es vorgesehen sein, dass zwischen den wenigstens zwei Abschnitten der rotierenden Zellenwalze oder Dosierwalze zumindest ein Abstandselement vorgesehen ist, welches drehbar auf der zumindest einen Lagerwelle montiert und/oder befestigt sein kann.

Die zumindest eine Lagerwelle kann vorzugsweise aus einem metallischen Material ausgebildet sein; d.h. Insbesondere kann die zumindest eine Lagerwelle aus einem Edelstahlmaterial, wie beispielsweise V2A ausgebildet sein. Alternativ kann die zumindest eine Lagerwelle aus einem Kunststoffmaterial ausgebildet sein.

Insbesondere kann die zumindest eine Lagerwelle vorzugsweise aus einem solchen Material gebildet sein, welches korrosionsbeständig bzw. unempfindlich gegen Rost ausgebildet ist. Dies kann deshalb erforderlich sein, dass die zumindest eine Lagerwelle auch bei Dünger oder dergleichen eingesetzt werden kann, ohne dass durch den Dünger zu starke Rostbildung hervorgerufen wird.

Weiter kann es vorgesehen sein, dass die erfindungsgemäße Dosiereinrichtung zumindest einen oberseitigen Einlass und zumindest zwei unterseitige Ausgänge umfasst. Der oberseitige Einlass kann vorzugsweise eine große Einlassöffnung aufweisen, wodurch die Gefahr einer Brückenbildung, d.h. eines Verstopfens, wie es beispielsweise bei der US 2012/0174844 A1 der Fall ist, weitgehend minimiert werden kann.

Weiter kann es vorgesehen sein, dass die zumindest zwei Ausgänge getrennt und/oder separiert voneinander ausgebildet sind, wobei insbesondere den zumindest zwei Ausgängen jeweils eine Fallschleuse zugeordnet ist.

Die Fallschleuse kann beispielsweise in zwei oder mehr Leitungssystemen münden, welche zwei oder mehr Leitungssysteme jeweils mit einer Verteileinheit gemäß der Patentanmeldung WO 2017/055266 A1 verbunden sein können. Dabei kann es vorgesehen, das jedes Leitungssystem einer Teilbreite einer landwirtschaftlichen Verteilmaschine entsprechen kann. Insbesondere kann es vorgesehen sein, dass jedem Abschnitt der rotierenden Zellenwalze oder Dosierwalze zwei Leitungssysteme nachgeordnet sind, so dass mit einem Abschnitt jeweils zwei Verteileinheiten mit entsprechendem Verteilgut versorgt werden können.

Um eine möglichst flexible Aktivierung und/oder Deaktivierung von Teilbreiten zu ermöglichen, kann es hierbei zudem vorgesehen sein, dass in den Leitungssystemen verstellbare bzw. verschwenkbare Klappen oder dergl. zugeordnet sind. Mittels der Klappen kann beispielsweise die Zuführung von Verteilgut von der Dosiereinrichtung in Richtung der Leitungssysteme ermöglicht oder verhindert werden. Die Klappen können beispielsweise manuell oder automatisch, insbesondere jedoch motorisch verschwenkt werden. Demnach können somit mittels der erfindungsgemäßen Dosiereinrichtung bis zu vier Teilbreiten aktiviert oder deaktiviert werden, wodurch gegenüber dem Stand der Technik ein im Wesentlichen vereinfachter Aufbau einer landwirtschaftlichen Verteilmaschine erreicht wird.

Weiterhin kann es vorgesehen sein, dass die Drehzahlen der Antriebseinheiten, insbesondere der Antriebswellen, der wenigstens zwei Abschnitte der rotierenden Zellenwalze oder Dosierwalze in Abhängigkeit davon, ob eine Dosierung von Verteilgut in eine oder zwei oder mehrere Leitungssysteme erfolgt, erhöht oder verringert werden können. Dadurch kann die Menge an dosiertem Verteilgut angepasst werden.

Weiter kann es vorgesehen sein, dass jeweils die rotierende Zellenwalze oder Dosierwalze der wenigstens zwei Abschnitte unabhängig voneinander austauschbar sind. Beispielsweise kann ein Austausch einer rotierenden Zellenwalze oder Dosierwalze eines Abschnitts erfolgen, während die andere rotierende Zellenwalze oder Dosierwalze des anderen Abschnitts im Gehäuse bleibt; d.h. auf einen Ausbau bzw. Demontage der jeweils anderen rotierende Zellenwalze oder Dosierwalze kann verzichtet werden, wodurch sich bei Wartungsarbeiten Zeit- und Kostenvorteile ergeben können.

Weiter kann dem Einlass in die Dosiereinrichtung bzw. der Oberseite der Dosiereinrichtung zumindest ein Absperrschieber zugeordnet sein. Mittels des zumindest einen Absperrschiebers kann der jeweilige Einlass in die Dosiereinrichtung freigegeben oder blockiert werden. Bei blockierter Stellung kann insbesondere ein Verteilgutfluss aus der jeweiligen Speichereinheit in Richtung der jeweiligen rotierenden Zellenwalze oder Dosierwalze unterbunden werden. Der zumindest eine Absperrschieber kann beispielsweise gemäß der Patentanmeldung DE 10 2007 016 760 A1 und/oder gemäß dem Patent EP 2 022 309 B1 ausgebildet sein.

Erfindungsgemäß ist vorgesehen, dass den Antriebseinheiten und dem Übertragungselement der wenigstens zwei Abschnitte der rotierenden Zellenwalze oder Dosierwalze eine Datenverarbeitungseinrichtung und ein

Positionsbestimmungssystem zugeordnet ist, so dass in Abhängigkeit von jeweiligen Ortskoordinaten bzw. positionsabhängig jeweils die wenigstens zwei Abschnitte der rotierenden Zellenwalze oder Dosierwalze insbesondere während einer Feldfahrt der landwirtschaftlichen Verteilmaschine ansteuerbar sind.

Mittels der Datenverarbeitungseinrichtung und des Positionsbestimmungssystems werden die jeweiligen Teilbreiten der landwirtschaftlichen Verteilmaschine geschaltet , indem die jeweiligen Antriebseinheiten der wenigstens zwei Abschnitte der rotierenden Zellenwalze oder Dosierwalze und insbesondere die Klappen gesteuert, insbesondere aktiviert oder deaktiviert, werden. Zur Ermittlung der Ortskoordinaten können Positionsbestimmungssysteme wie beispielsweise GPS; GLOSNASS oder dergleichen verwendet werden.

Anhand der aktuellen bzw. ermittelten Position der landwirtschaftlichen Verteilmaschine erfolgt mittels eines in der einen Datenverarbeitungseinrichtung hinterlegten Steuer- und/oder Regelungsprogramms jeweils eine Auswertung , an welchen Stellen bzw. Positionen bereits eine Verteilung von Verteilgut erfolgt ist. können Informationen über Feldgrenzen, Hindernisse oder dergleichen in der Datenverarbeitungseinrichtung und/oder im Steuer- und/oder Regelungsprogramm hinterlegt sein, so dass erkannt werden kann, an welchen Stellen bzw. Positionen das Ausbringen von Verteilgut gestoppt werden sollte.

Insbesondere kann anhand der Auswertung der aktuellen bzw. ermittelten Position eine Aktivierung oder Deaktivierung der Teilbreiten erfolgen. Auf dieser Grundlage können somit die Antriebseinheiten der wenigstens zwei Abschnitte der rotierenden Zellenwalze oder Dosierwalze oder die Klappen aktiviert oder deaktiviert werden. Somit lassen sich insbesondere auch Section Control Anwendungen realisieren.

Zudem kann der Dosiereinrichtung zumindest ein Sensorelement zugeordnet sein, mittels welchem der Versorgungsgrad der rotierenden Zellenwalze oder Dosierwalze der wenigstens zwei Abschnitte bestimmt und/oder überprüft werden kann; d.h. mittels des zumindest einen Sensorelements kann erfasst werden, ob die rotierende Zellenwalze oder Dosierwalze der wenigstens zwei Abschnitte ausreichend mit Verteilgut versorgt wird. Im Umkehrschluss kann das zumindest eine Sensorelement auch als Füllstandsmesseinrichtung der jeweiligen Speichereinheit der landwirtschaftlichen Verteilmaschine fungieren.

Weiter können den zumindest zwei Antriebswellen der wenigstens zwei Abschnitte der rotierenden Zellenwalze oder Dosierwalze eine gemeinsame Dichtlippe oder jeweils eine separate Dichtlippe zugeordnet sein. Die Dichtlippen können insbesondere zum Abstreifen des jeweiligen Verteilguts an der rotierenden Zellenwalze oder Dosierwalze, insbesondere an deren in die Mantelfläche integrierte Öffnungen, ausgebildet sein.

Das Gehäuse der Dosiereinrichtung kann zumindest weitgehend druckdicht ausgebildet sein. Insbesondere kann auch eine Verbindung zwischen der jeweiligen Speichereinheit der Dosiereinrichtung und der nachgeordneten Fallschleuse / Injektor druckdicht ausgebildet sein, wobei hierbei jeweils eine Dichtungselement zwischen den genannten Komponenten vorgesehen sein kann.

Des weiteren ist eine landwirtschaftliche Verteilmaschine zum Ausbringen von granularem Verteilgut offenbart. Bei der landwirtschaftlichen Verteilmaschine kann es sich insbesondere um eine Sämaschine oder einen pneumatischen Düngerstreuer handeln.

Die landwirtschaftliche Verteilmaschine umfasst wenigstens eine Speichereinheit zum Mitführen und Bereitstellen granularen Verteilguts. Bei der wenigstens einen Speichereinheit kann es sich insbesondere um einen Vorratsbehälter handeln.

Alternativ wäre es auch denkbar, dass die landwirtschaftliche Verteilmaschine wenigstens zwei oder mehr Speichereinheiten zum Mitführen und Bereitstellen von granularen Verteilgut aufweist. Die wenigstens zwei oder mehr Speichereinheiten können wahlweise in wenigstens einen Vorratsbehälter integriert und/oder Bestandteil wenigstens eines Vorratsbehälters sein, d.h. der wenigstens eine Vorratsbehälter kann in zwei Kammern unterteilt sein, welche Kammern jeweils die wenigstens zwei Speichereinheiten ausbilden. In den zwei Kammern können die wenigstens zwei Verteilgüter bzw. Verteilgutarten getrennt voneinander im wenigstens einen Vorratsbehälter mitgeführt und bereitgestellt werden.

Alternativ wäre es auch denkbar, dass die wenigstens zwei Speichereinheiten jeweils durch wenigstens zwei Vorratsbehälter gebildet sind, so dass ein Verteilgut in einem Vorratsbehälter und das weitere Verteilgut im weiteren Vorratsbehälter der wenigstens zwei Vorratsbehältern mitgeführt und bereitgestellt werden kann. Bei den wenigstens zwei Verteilgütern kann es sich jeweils um das gleiche Verteilgut oder um unterschiedliche Verteilgüter handeln.

Die landwirtschaftliche Verteilmaschine umfasst eine der wenigstens einen Speichereinheit zugeordnete und insbesondere an einem unteren Auslass der Speichereinheit angeordnete Dosiereinrichtung mit rotierender Zellenwalze oder rotierender Dosierwalze zur Entnahme definierbarer Mengen an Verteilgut und/oder zur Eindosierung des Verteilguts in eine Förderluftströmung. Die am unteren Auslass der Speichereinheit angeordnete Dosiereinrichtung kann insbesondere zum volumetrischen Dosieren von Verteilgut dienen.

Weiter sind zumindest zwei Verteileinheiten vorgesehen, welche jeweils über ein Leitungssystem mit der wenigstens einen Speichereinheit in Verbindung stehen, so dass die zumindest zwei Verteileinheiten jeweils mit Verteilgut der Speichereinheit gespeist und/oder versorgt werden, welches Verteilgut von der Förderluftströmung getragen und von der Speichereinheiten zu den zumindest zwei Verteileinheiten befördert wird.

Innerhalb des jeweiligen Leitungssystems ist eine Förderluftströmung vorhanden, welche jeweils durch zumindest ein Gebläse erzeugt wird. Bei dem zumindest einen Gebläse kann es sich beispielsweise um ein Zentrifugal- oder Radialgebläse oder dergleichen handeln. Das aus der wenigstens einen Speichereinheit entnommene Verteilgut kann somit mit der im Leitungssystem herrschenden Förderluftströmung vermischt werden, woraus resultierend jeweils ein Verteilgut-Luftvolumenstrom ausgebildet wird.

Die zumindest zwei Verteileinheiten umfassen jeweils eine Vielzahl von Abgängen, mittels welcher das Verteilgut entsprechend der Anzahl an Abgängen aufgeteilt wird, und wobei die Abgänge der zumindest zwei Verteileinheiten jeweils in mindestens eine Saatleitung münden.

Die zumindest zwei Verteileinheiten können insbesondere einen Verteilerkopf mit einer Vielzahl von Abgängen umfassen, mittels welcher das Verteilgut entsprechend der Anzahl an Abgänge aufgeteilt wird. Die einzelnen Abgänge können in einem gleichmäßigen Abstand am Umfang des Verteilerkopfs angeordnet sein. Je gleichmäßiger die Anordnung der Abgänge am Umfang des Verteilerkopfes ist, desto gleichmäßiger kann die Querverteilung des Verteilguts des Verteilerturms ausgebildet sein. Die Querverteilung kann unter anderem von den Strömungsgeschwindigkeiten in den jeweiligen Abgängen abhängen.

Die zumindest zwei Verteileinheiten können jeweils ein Steigrohr umfassen, entlang welcher das jeweilige Verteilgut bzw. der Verteilgut-Luftvolumenstrom zumindest näherungsweise senkrecht (von unten nach oben oder von oben nach unten) befördert werden kann. Die zumindest zwei Verteileinheiten können jeweils einen Verteilerkopf umfassen, an dessen Umfang eine Vielzahl von Abgängen vorgesehen ist. Der Verteilgut-Luftvolumenstrom kann somit von unten oder von oben gegen den Verteilerkopf prallen und entsprechend der Anzahl an Abgängen in einzelne Verteilgut-Luftvolumenströme aufgeteilt werden.

Die landwirtschaftliche Verteilmaschine umfasst weiter eine Mehrzahl von Säscharen zum Ausbringen der zu verteilenden Verteilgüter, wobei die mindestens eine Saatleitung der Abgänge jeweils in ein Säschar mündet. Insbesondere können die Verteilgüter jeweils mittels der Säschare in eine Saatfurche abgelegt werden, welche jeweils durch das Säschar erzeugt und/oder durch zusätzliche Einrichtungen an der Verteileinheit generiert wurde. Die Mehrzahl an Säscharen können insbesondere in einem geringen Abstand zueinander beabstandet angeordnet sein.

Die Säschare können beispielsweise als Scheibenschare in Form von Einzelscheiben- oder Doppelscheibenschare ausgebildet sein. Alternativ können die Säschare auch als Zinkenschare oder dergleichen ausgebildet sein.

Es ist insbesondere vorgesehen, dass die rotierende Zellenwalze oder Dosierwalze der Speichereinheit zugeordnete Dosiereinrichtung zumindest zweigeteilt ist, wobei jeder der wenigstens zwei Abschnitte der rotierenden Zellenwalze oder Dosierwalze in eine separate Verbindungsleitung des zu den zwei oder mehr Verteileinheiten führenden Leitungssystems mündet, wobei jeder der wenigstens zwei Abschnitte der rotierenden Zellenwalze oder Dosierwalze über einen eigenen Antrieb zur jeweils voneinander unabhängigen Antriebsdrehzahlsteuerung verfügt.

Die Dosiereinrichtung der landwirtschaftlichen Verteilmaschine kann insbesondere gemäß einem der Ansprüche 1 bis 12 ausgebildet sein.

Es sei an dieser Stelle ausdrücklich erwähnt, dass alle Aspekte und Ausführungsvarianten, die im Zusammenhang mit der erfindungsgemäßen Dosiereinrichtung erläutert wurden, gleichermaßen Teilaspekte der landwirtschaftlichen Verteilmaschine betreffen oder sein können. Wenn daher an einer Stelle bei der Beschreibung oder auch bei den Anspruchsdefinitionen zur erfindungsgemäßen Dosiereinrichtung von bestimmten Aspekten und/oder Zusammenhängen und/oder Wirkungen die Rede ist, so gilt dies gleichermaßen für die landwirtschaftliche Verteilmaschine. In umgekehrter Weise gilt dasselbe, so dass auch alle Aspekte und Ausführungsvarianten, die im Zusammenhang mit der landwirtschaftlichen Verteilmaschine erläutert wurden, gleichermaßen Teilaspekte der erfindungsgemäßen Dosiereinrichtung betreffen oder sein können. Wenn daher an einer Stelle bei der Beschreibung oder auch bei den Anspruchsdefinitionen zur landwirtschaftlichen Verteilmaschine von bestimmten Aspekten und/oder Zusammenhängen und/oder Wirkungen die Rede ist, so gilt dies gleichermaßen für die Dosiereinrichtung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1A zeigt in einer perspektivischen Ansicht eine Ausführungsform einer aus dem Stand der Technik bekannten Dosiereinrichtung.
Figur 1B zeigt in einer schematischen Schnittdarstellung die in Figur 1A gezeigte Dosiereinrichtung.
Figur 1C zeigt in einer schematischen Draufsicht die in den Figuren 1A und 1B gezeigte Dosiereinrichtung.
Figur 2A zeigt in einer perspektivischen Ansicht eine Ausführungsform der erfindungsgemäßen Dosiereinrichtung.
Figuren 2B zeigt in einer schematischen Schnittdarstellung die in Figur 2 gezeigte Dosiereinrichtung.
Figur 2C zeigt in einer schematischen Draufsicht die in den Figuren 2A und 2B gezeigte Dosiereinrichtung.
Figur 3 zeigt in einer schematischen Schnittdarstellung die in den Figuren 2A bis 2C gezeigte Dosiereinrichtung im Schnitt mit zusätzlicher Fallschleuse.
Figur 4 zeigt in einer perspektivischen Explosionsdarstellung die in den Figuren 2A bis 3 verwendete Antriebswelle sowie Antriebseinheiten der rotierenden Zellenwalze oder Dosierwalze.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Dosiereinrichtung ausgestaltet sein kann und stellen keine abschließende Begrenzung dar.

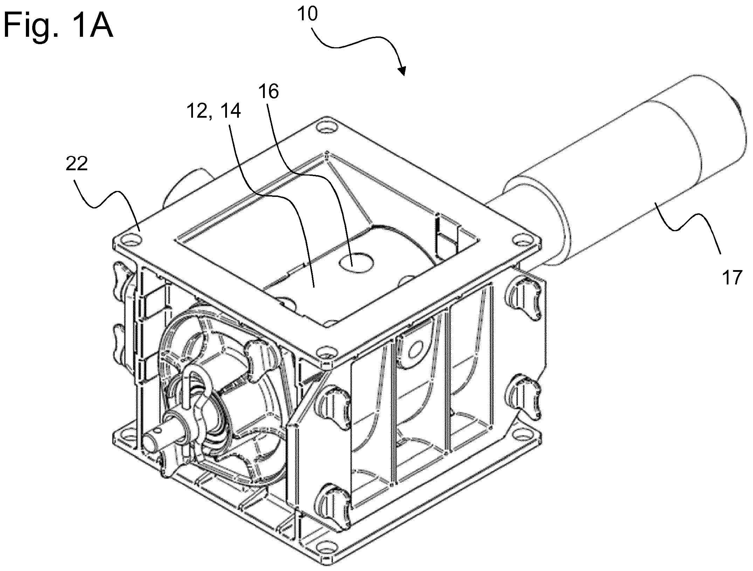

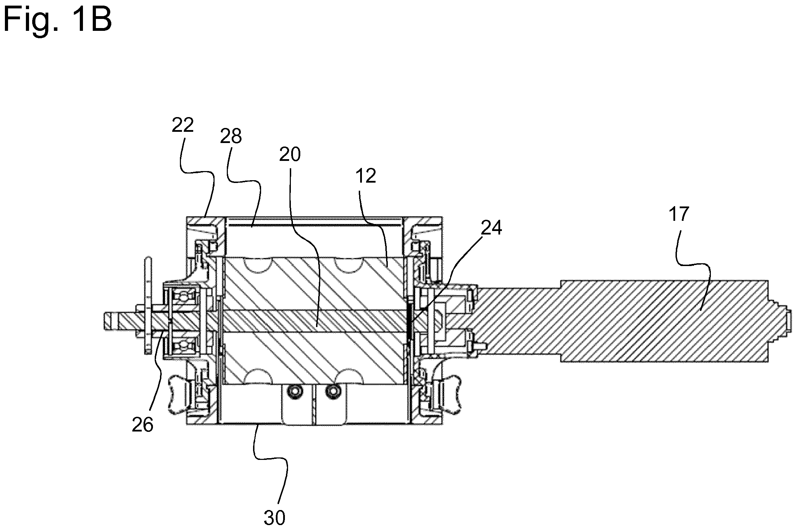

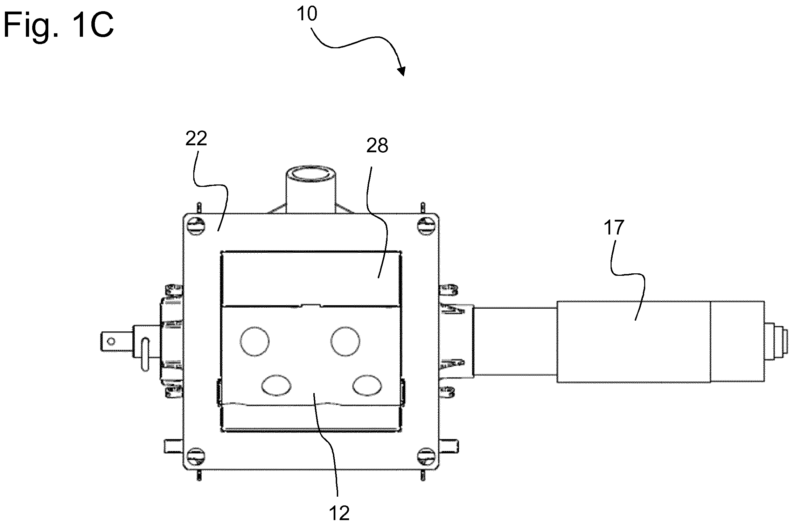

Die Figuren 1A bis 1C zeigen in verschiedenen Ansichten eine aus dem Stand der Technik bekannte Dosiereinrichtung 10, welche gemäß WO 97/00603 A1 ausgebildet ist. Die Dosiereinrichtung 10 findet Verwendung in einer hier nicht dargestellten landwirtschaftlichen Verteilmaschine. Die landwirtschaftliche Verteilmaschine umfasst in aller Regel eine hier nicht dargestellte Speichereinheit, welche beispielsweise in Form eines Vorratsbehälters ausgebildet ist und zum Mitführen und Bereitstellen von granularem Verteilgut, wie beispielsweise Saatgut, Dünger oder dergleichen dient.

Die hier nicht dargestellte Speichereinheit umfasst an ihrem Boden, vorzugsweise am tiefsten Punkt einen hier ebenfalls nicht dargestellten Auslass, wobei dem Auslass die Dosiereinrichtung 10 zugeordnet ist. Mittels der Dosiereinrichtung 10 kann aus der Speichereinheit Verteilgut in einer bestimmten Menge entnommen werden.

Gemäß den vorliegenden Figuren 1A bis 1C ist die Dosiereinrichtung 10 in Form einer Zellenwalze oder Dosierwalze 12 ausgebildet. Die Zellenwalze oder Dosierwalze 12 umfasst eine zylindrische Mantelfläche 14, welche eine Vielzahl von Öffnungen 16 umfasst, über welche Öffnungen 16 das Verteilgut passieren kann.

Die Zellenwalze oder Dosierwalze 12 ist rotierend ausgebildet und wird insbesondere mittels einer Antriebseinheit 17 rotierend angetrieben. Bei der Antriebseinheit 17 kann es sich beispielsweise um einen Elektromotor oder Hydraulikmotor handeln.

Die Zellenwalze oder Dosierwalze 12 umfasst eine Welle, insbesondere eine Antriebswelle 20, welche Antriebswelle 20 mit der Antriebseinheit 17 in Verbindung steht. Aufgrund dessen wird die Zellenwalze oder Dosierwalze 12 rotierend angetrieben, wobei die Rotationsachse der Zellenwalze oder Dosierwalze 12 der Achse der Antriebswelle 20 entspricht.

Je nach Drehzahl der Antriebseinheit 17 bzw. der Rotationsgeschwindigkeit der Zellenwalze oder Dosierwalze 12 kann entsprechend mehr oder weniger Verteilgut aus der Speichereinheit entnommen werden.

Aus den Figuren 1A bis 1C wird deutlich, dass die rotierende Zellenwalze oder Dosierwalze 12 in einem Gehäuse 22 gelagert ist. Insbesondere ist die Welle bzw. Antriebswelle 18 der rotierenden Zellenwalze oder Dosierwalze 12 im Gehäuse 22 gelagert, während die Antriebseinheit 17 außerhalb des Gehäuses 22 angeordnet ist.

Die Lagerung der Antriebswelle 20 der rotierenden Zellenwalze oder Dosierwalze 12 erfolgt mittels einer ersten Lagerung 24 und einer zweiten Lagerung 26; d.h. die Lagerung der Antriebswelle 17 der rotierenden Zellenwalze oder Dosierwalze 12 erfolgt zweiseitig bzw. zweischnittig.

Die Dosiereinrichtung 10, insbesondere das Gehäuse 22, weist oberseitig einen Einlass 28 auf, welcher unmittelbar unterhalb einer hier nicht dargestellten Öffnung der Speichereinheit angeordnet ist. Über den Einlass 28 kann Verteilgut aus der Speichereinheit in die Dosiereinrichtung 10 gelangen.

Gegenüberliegend zur Einlassöffnung 28 bzw. auf der Unterseite des Gehäuses 22 ist eine Auslassöffnung 30 vorgesehen, welcher Auslassöffnung 30 beispielsweise eine hier nicht dargestellte Doppelfallschleuse oder ein Doppelinjektor nachgeordnet sein kann. Zumindest ein Abgang der Doppelfallschleuse oder des Doppelinjektors kann verschließbar ausgebildet sein.

Bei der in den Figuren 1A bis 1C gezeigten Dosiereinrichtung 10 ist jedoch keine Aktivierung und/oder Deaktivierung der Verteilung an einzelnen Teilbreiten möglich, da aufgrund der rotierenden Zellenwalze oder Dosierwalze 12 nur das Verteilgut aus der Speichereinheit dosiert und/oder entnommen werden kann, nicht aber kann die Ausbringmenge an einzelnen Teilbreiten unabhängig von anderen Teilbreiten erhöht oder verringert werden.

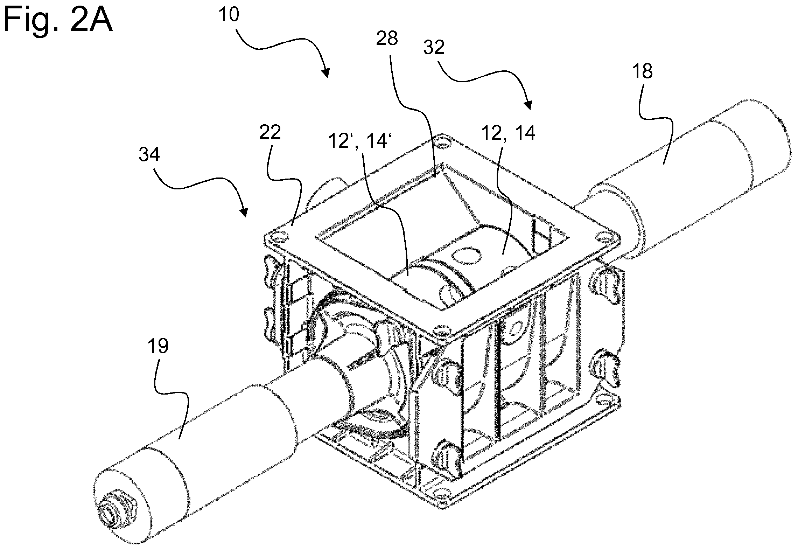

Die Figuren 2A bis 2C zeigen in verschiedenen Ansichten jeweils eine Ausführungsform der erfindungsgemäßen Dosiereinrichtung 10. Die Dosiereinrichtung 10 wird insbesondere bei hier nicht dargestellten landwirtschaftlichen Verteilmaschine eingesetzt. Die landwirtschaftliche Verteilmaschine umfasst in aller Regel eine hier nicht dargestellte Speichereinheit, welche beispielsweise in Form eines Vorratsbehälters ausgebildet ist und zum Mitführen und Bereitstellen von granularem Verteilgut, wie beispielsweise Saatgut, Dünger oder dergleichen dient.

Die hier nicht dargestellte Speichereinheit umfasst an ihrem Boden, vorzugsweise am tiefsten Punkt einen hier ebenfalls nicht dargestellten Auslass, wobei dem Auslass die erfindungsgemäße Dosiereinrichtung 10 zugeordnet ist. Mittels der Dosiereinrichtung 10 kann aus der Speichereinheit Verteilgut in einer bestimmten Menge entnommen werden bzw. volumetrisch dosiert werden.

Gemäß den vorliegenden Figuren 2A bis 2C ist die Dosiereinrichtung durch eine rotierende Zellenwalze oder Dosierwalze 12, 12' gebildet. Insbesondere ist die rotierende Zellenwalze oder Dosierwalze 12, 12' zumindest zweigeteilt, wobei jeder der wenigstens zwei Abschnitte 32, 34 der rotierenden Zellenwalze oder Dosierwalze 12, 12' jeweils in eine separate hier nicht dargestellte Verbindungsleitung eines zu zwei oder mehr Verteileinheiten führenden Leitungssystems münden; d.h. das aus der Speichereinheit entnommene Verteilgut kann verschiedenen Leitungssystemen zugeführt werden, welche Leitungssysteme jeweils in eine Verteileinheit münden. Die Verteileinheiten stehen über Saatleitungen mit Säscharen oder sonstigen Ausbringmitteln in Verbindung, so dass das Verteilgut anschließend ausgebracht und/oder abgelegt werden kann.

Insbesondere umfasst die Dosiereinrichtung 10 bzw. die rotierenden Zellenwalze oder Dosierwalze 12, 12' einen ersten Abschnitt 32 sowie einen zweiten Abschnitt 34. Jeder der wenigstens zwei Abschnitte 32, 34 der rotierenden Zellenwalze oder Dosierwalze 12, 12' verfügt über eine Antriebseinheit 18, 19 zur jeweils voneinander unabhängigen Antriebsdrehzahlsteuerung, d.h. dem ersten Abschnitt 32 ist eine erste Antriebseinheit 18 und dem zweiten Abschnitt 34 ist eine zweite Antriebseinheit zugeordnet. Bei den Antriebseinheiten 18, 19 kann es sich beispielsweise um elektrische und/oder hydraulische Antriebsmotoren oder dergleichen handeln.

Der erste Abschnitt 32 und der zweite Abschnitt 34 der rotierenden Zellenwalze oder Dosierwalze 12, 12' sind identisch ausgebildet und verfügen somit über gleiche Abmessungen, insbesondere Breiten und/oder Höhen etc. Darüber hinaus verfügt jeder der wenigstens zwei Abschnitte 32, 34 der Zellenwalze oder Dosierwalze 12, 12' über eine Welle bzw. Antriebswelle 20, 20' sowie über eine zylindrische Mantelfläche 14, 14'. Zudem umfassen die zylindrischen Mantelflächen 14, 14' der rotierenden Zellenwalze oder Dosierwalze 12, 12' eine Vielzahl von Öffnungen 16, über welche Öffnungen 16 das Verteilgut aus der Speichereinheit befördert werden kann.

Ergänzend sei darauf hingewiesen, dass zwischen den wenigstens zwei Abschnitten 32, 34 ein Zwischensteg 48 vorgesehen ist, wodurch die zweiteilige Ausbildung der Dosiereinrichtung verdeutlicht werden kann. Auf den Zwischensteg 48 kann aber auch ohne Weiteres verzichtet werden.

Aufgrund der unabhängigen Steuerung, insbesondere unabhängigen Antriebsdrehzahlsteuerung, können die Antriebseinheiten 18, 19 der wenigstens zwei Abschnitte 32, 34 der rotierenden Zellenwalze oder Dosierwalze 12, 12' unabhängig voneinander betrieben werden. Beispielsweise können die beiden Antriebseinheiten 18, 19 mit gleicher Drehzahl oder mit unterschiedlicher Drehzahl betrieben werden, so dass eine variable Anpassung der ausgebrachten Menge an Verteilgut erreicht werden kann. Insbesondere werden die Antriebseinheiten 18, 19 bzw. die Antriebswellen 20, 20' jeweils in unterschiedlicher Drehrichtung (vgl. Pfeile n1, n2) betrieben; d.h. die Antriebswellen 20, 20' und damit die Zellenwalze oder Dosierwalze 12, 12' rotieren entgegengesetzt.

Darüber hinaus sind die Antriebseinheiten 18, 19 der wenigstens zwei Abschnitte 32, 34 der rotierenden Zellenwalze oder Dosierwalze 12, 12' einseitig abschaltbar; d.h. beispielsweise kann die erste Antriebseinheit 18 des ersten Abschnitts 32 betrieben werden, während die zweite Antriebseinheit 19 des zweiten Abschnitts 34 deaktiviert ist und ruht.

Die wenigstens zwei Abschnitte 32, 34 der rotierenden Zellenwalze oder Dosierwalze 12, 12' bilden eine bauliche Einheit und sind in einem, insbesondere, gemeinsamen Gehäuse 22 gelagert. Vorzugsweise sind die wenigstens zwei Abschnitte der rotierenden Zellenwalze oder Dosierwalze 12, 12' in einem gemeinsamen Gehäuse 22 rotierend gelagert. Die rotierende Zellenwalze oder Dosierwalze 12, 12', insbesondere deren wenigstens zwei Abschnitte 32, 34 sind jeweils unabhängig voneinander austauschbar.

Im Gegensatz zu der im Stand der Technik bekannten Ausführungsform der Dosiereinrichtung 10 gemäß den Figuren 1A bis 1C sind die Antriebswellen 20, 20' der wenigstens zwei Abschnitte 32, 34 der rotierenden Zellenwalze oder Dosierwalze 12 gemäß den Figuren 2A bis 2C jeweils nur einseitig gelagert. Insbesondere sind die Antriebswellen 20, 20' jeweils in dem Bereich gelagert, welcher im Bereich bzw. der nahe der jeweiligen Antriebseinheit 18, 19 liegt.

Zur Lagerung der Antriebswellen 20, 20' sind jeweils Lagereinheit 36, 36' vorgesehen. Die Lagereinheit 36, 36' kann beispielsweise in die Gehäusewand des Gehäuses 22 integriert sein bzw. Bestandteil der Gehäusewand des Gehäuses 22 sein.

Die Antriebswellen 20, 20' der wenigstens zwei Abschnitte 32, 34 der rotierenden Zellenwalze oder Dosierwalze 12, 12' sind fluchtend zueinander ausgerichtet und vorzugsweise beabstandet zueinander angeordnet. Die Antriebswellen 20, 20' der wenigstens zwei Abschnitte 32, 34 der rotierenden Zellenwalze oder Dosierwalze 12, 12' erstrecken sich jeweils zumindest abschnittsweise entlang der Längserstreckung des Gehäuses 22. Insbesondere sind jeweils die freien Stirnseiten bzw. freien Enden der Antriebswellen 20, 20' beabstandet zueinander angeordnet.

Zwischen den zumindest zwei zueinander beabstandet angeordneten Antriebswellen 20, 20' ist eine Lagerwelle 38 vorgesehen. Die Lagerwelle 38 ist der Antriebswelle 20 der ersten Antriebseinheit 18 fest zugeordnet. Dementsprechend ist die Lagerwelle 38 gegenüber der Antriebswelle 20' der zweiten Antriebseinheit 19 drehbar gelagert.

Die Lagerwelle 38 ist mit dem freien Ende der Antriebswelle 20 der ersten Antriebseinheit 18 form-, stoff- und/oder kraftschlüssig verbunden. Beispielsweise ist die Lagerwelle 38 am freien Ende der Antriebswelle 20 der ersten Antriebseinheit 18 aufgesteckt und/oder eingesteckt und/oder verschweißt oder dergleichen.

Um diese Lagerwelle 38 vor Schmutz oder dergleichen zu schützen, ist zwischen den rotierenden Zellenwalze oder Dosierwalze 12, 12' zumindest ein Dichtelement 40 vorgesehen. Das Dichtelement 40 ist in Form eines Radialwellendichtrings oder dergleichen ausgebildet.

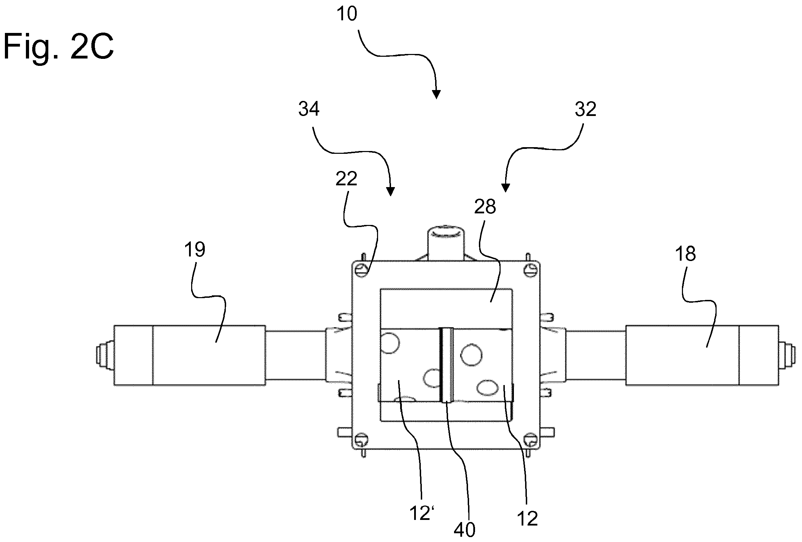

Wie es aus der Figur 2C hervorgeht, können durch die Lagerwelle 38 die durch das oberhalb der Dosiereinrichtung 10 befindliche Verteilgut hervorgerufene Biegungen bzw. Kräfte besser aufgenommen werden kann (vgl. Pfeil F1). Insbesondere ist die Lagerwelle 38 derartig ausgebildet, dass Radialkräfte aufgenommen werden können. Da die Antriebswellen 20, 20' mittels der Lagereinheiten 36, 36' am Gehäuse 22 gelagert sind, werden jeweils Kräfte (vgl. Pfeil F2 und F3) entgegen zur Kraft F1 erzeugt bzw. hervorgerufen. Aufgrund dessen können die jeweils auftretenden Kräfte besser kompensiert und/oder aufgenommen werden.

Die Lagerwelle 38 ist vorzugsweise aus einem metallischen Material, insbesondere aus einem Edelstahlmaterial wie V2A oder aus einem Kunststoffmaterial ausgebildet.

Wie es insbesondere aus den Figuren 2A und 2C hervorgeht, weist die Dosiereinrichtung 10 bzw. dessen Gehäuse 22 oberseitig einen Einlass bzw. eine Einlassöffnung bzw. einen Eingang 28 auf. Der Einlass 28 ist vorzugsweise unterhalb einer hier nicht dargestellten Öffnung der Speichereinheit angeordnet. Über den Einlass 28 kann Verteilgut aus der Speichereinheit in die Dosiereinrichtung 10 gelangen.

Auf der Unterseite des Gehäuses 22 sind jeweils zwei Auslässe bzw. Auslassöffnungen 30, 30' vorgesehen, wobei jeder Auslass 30. 30' einem Abschnitt 32, 34 der rotierenden Zellenwalze oder Dosierwalze 12, 12' zugeordnet ist, d.h. die Auslässe bzw. Ausgänge 30 ,30' sind jeweils getrennt voneinander ausgebildet bzw. voneinander separiert.

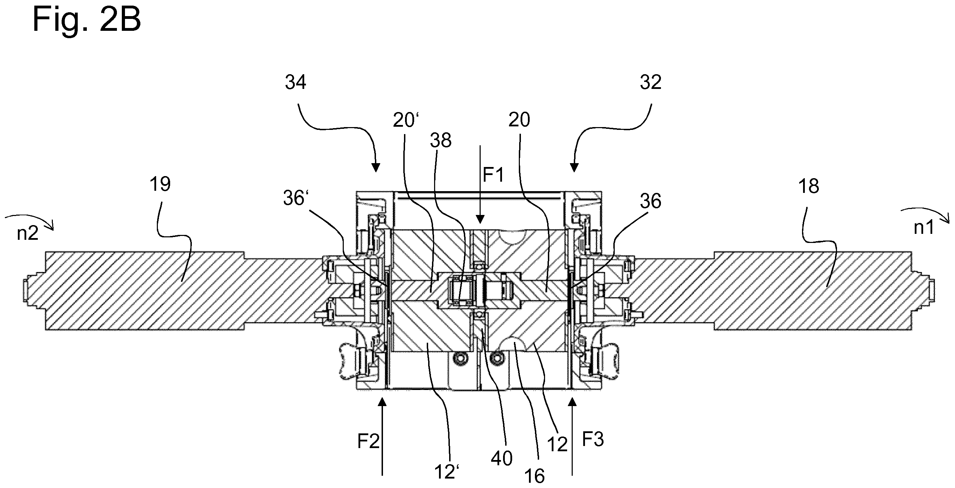

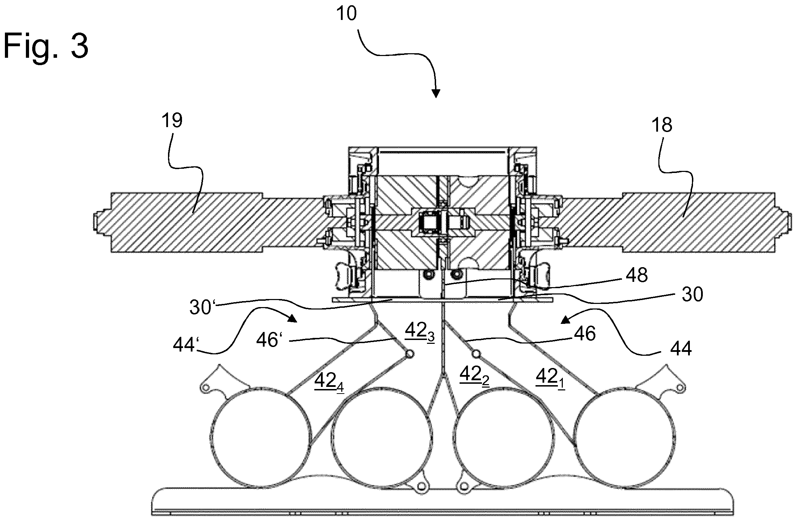

In der Figur 3 ist die in den Figuren 2 gezeigte Dosiereinrichtung 10 mit zwei Auslässen 30, 30' abgebildet. Die zwei Auslässe 30, 30' verzweigen sich jeweils in zwei Leitungssysteme; d.h. insgesamt münden die zwei Auslässe 30, 30' in vier Leitungssysteme, welche jeweils den Teilbreiten der landwirtschaftlichen Verteilmaschine entsprechen. Insbesondere münden die Auslässe 30, 30' jeweils über eine Doppelfallschleuse 44, 44' in die jeweiligen Leitungssysteme. Demnach münden der Auslass 30 des ersten Abschnitts 32 der rotierenden Zellenwalze oder Dosierwalze 12, 12' in ein erstes Leitungssystem 42₁ und in ein zweites Leitungssystem 42₂ und der Auslass 32 des zweiten Abschnitts 34 der rotierenden Zellenwalze oder Dosierwalze 12 in ein drittes Leitungssystem 42₃ und in viertes Leitungssystem 42₄.

Zum Blockieren oder Freigeben von entsprechenden Leitungssystemen 42₁ bis 42₄ bzw. zur Aktivierung oder Deaktivierung von Teilbreiten der landwirtschaftlichen Verteilmaschine umfasst die Doppelfallschleuse 44, 44' jeweils eine verschwenkbare Klappe 46, 46'. Gemäß der Figur 3 sind das zweite Leitungssystem 42₂ mittels einer ersten Klappe 46 und das vierte Leitungssystem 42₄ mittels einer zweite Klappe 46' blockiert; d.h. das mittels der zweigeteilten Zellenwalze oder Dosierwalze 12, 12' aus einer Speichereinheit entnommene Verteilgut können dem ersten Leitungssystem 42₁ und dem dritten Leitungssystem 42₃ zugeführt und entsprechend einer hier nicht dargestellten Verteileinheit zugeführt werden, wobei das Verteilgut anschließend über die Verteileinheit einem Säschar zugeführt wird. Mittels des jeweiligen Säschars wird das jeweilige Verteilgut in die durch das Säschar erzeugte Saatfurche abgelegt.

Die Klappen 46, 46' sind beispielsweise manuell oder automatisch, insbesondere jedoch motorisch verschwenkbar ausgebildet. Gemäß der vorliegenden Figur 3 können somit mittels der erfindungsgemäßen Dosiereinrichtung 10 bis zu vier Teilbreiten aktiviert oder deaktiviert werden.

Darüber hinaus sind den Antriebseinheiten 18, 19 jeweils eine hier nicht dargestellte Datenverarbeitungseinrichtung und/oder ein hier nicht dargestelltes Positionsbestimmungssystem zugeordnet, so dass in Abhängigkeit von jeweiligen Ortskoordinaten bzw. positionsabhängig jeweils die wenigstens zwei Abschnitte 32, 34 der rotierenden Zellenwalze oder Dosierwalze 12, 12' während einer Feldfahrt der landwirtschaftlichen Verteilmaschine ansteuerbar sind.

Mittels der zumindest einen Datenverarbeitungseinrichtung und/oder des zumindest Positionsbestimmungssystems können die jeweiligen Teilbreiten der landwirtschaftlichen Verteilmaschine geschaltet werden. Insbesondere können dadurch die jeweiligen Antriebseinheiten 18, 19 der wenigstens zwei Abschnitte 32, 34 der rotierenden Zellenwalze oder Dosierwalze 12, 12' und/oder die Klappen gesteuert, insbesondere aktiviert oder deaktiviert, werden. Zur Ermittlung der Ortskoordinaten können Positionsbestimmungssysteme wie beispielsweise GPS; GLOSNASS oder dergleichen verwendet werden.

Anhand der aktuellen bzw. ermittelten Position der landwirtschaftlichen Verteilmaschine kann mittels eines in der zumindest einen Datenverarbeitungseinrichtung hinterlegten Steuer- und/oder Regelungsprogramms jeweils eine Auswertung erfolgen, an welchen Stellen bzw. Positionen bereits eine Verteilung von Verteilgut erfolgt hat und/oder noch zu erfolgen hat. Auch können Informationen über Feldgrenzen, Hindernissen oder dergleichen in der Datenverarbeitungseinrichtung und/oder im Steuer- und/oder Regelungsprogramm hinterlegt sein, so dass erkannt werden kann, an welchen Stellen bzw. Positionen das Ausbringen von Verteilgut gestoppt werden sollte.

Insbesondere kann anhand der Auswertung der aktuellen bzw. ermittelten Position eine Aktivierung oder Deaktivierung der Teilbreiten erfolgen. Auf dieser Grundlage können somit die Antriebseinheiten 18, 19 der wenigstens zwei Abschnitte 32, 34 der rotierenden Zellenwalze oder Dosierwalze 12, 12' oder die Klappen 46, 46' aktiviert oder deaktiviert werden. Somit lassen sich insbesondere auch Section Control Anwendungen realisieren.

Ergänzend sei an dieser Stelle darauf hinzuweisen, dass das Gehäuse 22 zumindest weitgehend druckdicht ausgebildet ist und dass insbesondere auch eine Verbindung zwischen der jeweiligen Speichereinheit der Dosiereinrichtung 10 und der nachgeordneten Fallschleuse 44, 44' druckdicht ausgebildet ist. Hierfür können jeweils Dichtungselemente zwischen den genannten Komponenten vorgesehen sein.

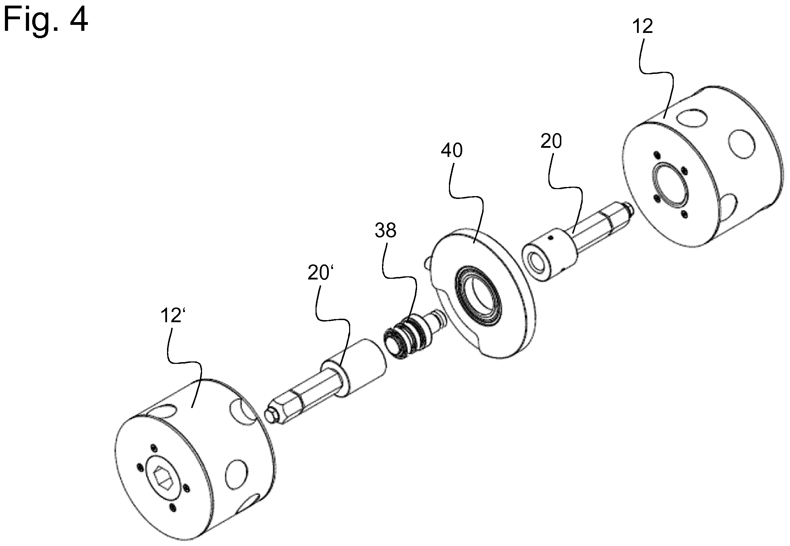

In der Figur 4 ist in einer Explosionsdarstellung die in den Figuren 2A bis 3 verwendete rotierende Zellenwalze oder Dosierwalze 12, 12' abgebildet, so dass insbesondere der zweiteilige Aufbau der Dosiereinrichtung 10 deutlich wird.

Die Dosiereinrichtung 10 ist in Form einer rotierenden Zellenwalze oder Dosierwalze 12, 12' gebildet, welche aufgrund des zweiteiligen Aufbaus einen ersten Abschnitt 32 und einen zweiten Abschnitt 34 umfasst. Jeder Abschnitt 32, 34, insbesondere der erste Abschnitt 32 und der zweite Abschnitt 34, umfassen jeweils eine rotierende Zellenwalze oder Dosierwalze 12, 12', welche identisch ausgebildet sind.

Die Zellenwalze oder Dosierwalze 12, 12' umfasst jeweils eine zylindrische Mantelfläche 14, 14', welche jeweils eine Vielzahl von Öffnungen 16 aufweisen. Zum rotierenden Antreiben der Zellenwalze oder Dosierwalze 12, 12' sind diesen jeweils Antriebswellen 20, 20' zugeordnet, welche fluchtend zueinander angeordnet sind. Insbesondere sind jeweils die Antriebswellen 20, 20' der beiden Abschnitte 32, 34 zueinander beabstandet angeordnet. Zwischen den zueinander beabstandet angeordneten Antriebswellen 20, 20' ist eine Lagerwelle 38 angeordnet und/oder vorgesehen. Die Lagerwelle 38 ist insbesondere zu den beiden Antriebswellen 20, 20' fluchtend angeordnet.

Wie bereits bei den Figuren 2 darauf hingewiesen, ist die Lagerwelle 38 der Antriebswelle 20 des ersten Abschnitts 32 der rotierenden Zellenwalze oder Dosierwalze 12 fest zugeordnet. Insbesondere ist die Lagerwelle 38 dem freien Ende der Antriebswelle 20 des ersten Abschnitts 32 der rotierenden Zellenwalze oder Dosierwalze 12, 12' fest, insbesondere form-, stoff- und/oder kraftschlüssig zugeordnet. Beispielsweise ist die Lagerwelle 38 am freien Ende bzw. an der Stirnseite der Antriebswelle 20 aufgesteckt und/oder eingesteckt. Gegenüber der Antriebswelle 20' des zweiten Abschnitts 34 der rotierenden Zellenwalze oder Dosierwalze 12, 12' ist die Lagerwelle drehbar ausgebildet.

Bei der vorliegenden Figur 4 wird insbesondere auch das Dichtungselement 40 deutlich, welches die Lagerwelle 38 vor Schmutz oder dergleichen schützt. Das Dichtelement 40 ist insbesondere in Form eines Radialwellendichtrings oder dergleichen ausgebildet.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

10 Dosiereinrichtung
12 Zellenwalze; Dosierwalze
12' Zellenwalze, Dosierwalze
14 Mantelfläche
14' Mantelfläche
16 Öffnung
17 Antriebseinheit
18 Erste Antriebseinheit
19 Zweite Antriebseinheit
20 Welle; Antriebswelle
20' Welle; Antriebswelle
22 Gehäuse
24 Erste Lagerung
26 Zweite Lagerung
28 Einlass; Einlassöffnung
30 Auslass; Auslassöffnung
30' Auslass; Auslassöffnung
32 Erster Anschnitt
34 Zweiter Abschnitt
36 Lagereinheit
36' Lagereinheit
38 Lagerwelle
40 Dichtelement
42₁ Erstes Leitungssystem
42₂ Zweites Leitungssystem
42₃ Drittes Leitungssystem
42₄ Viertes Leitungssystem
44 Doppelfallschleuse
44' Doppelfallschleuse
46 Klappe
46' Klappe
48 Zwischensteg
F1 Kraft
F2 Kraft
F3 Kraft
n1 Drehrichtung
n1 Drehrichtung

## Patentansprüche

1. Dosiereinrichtung (10) zur Dosierung von granularem Verteilgut, wie bspw. Saatgut, oder Dünger für eine landwirtschaftliche Verteilmaschine, welche Dosiereinrichtung (10) durch eine rotierende Zellenwalze oder Dosierwalze (12, 12') gebildet ist,
wobei die rotierende Zellenwalze oder Dosierwalze (12, 12') zumindest zweigeteilt ist, wobei jeder der wenigstens zwei Abschnitte (32, 34) der rotierenden Zellenwalze oder Dosierwalze (12, 12') in eine separate Verbindungsleitung eines zu zwei oder mehr Verteileinheiten führenden Leitungssystems (42) mündet,
wobei jeder der wenigstens zwei Abschnitte (32, 34) der rotierenden Zellenwalze oder Dosierwalze (12) über eine eigene Antriebseinheit (18, 19) zur jeweils voneinander unabhängigen Antriebsdrehzahlsteuerung verfügt, und
zumindest einer der Antriebseinheiten (18, 19) eine Datenverarbeitungseinrichtung und ein Positionsbestimmungssystem zugeordnet ist, so dass in Abhängigkeit von jeweiligen Ortskoordinaten bzw. positionsabhängig jeweils die wenigstens zwei Abschnitte (32, 34) der rotierenden Zellenwalze oder Dosierwalze (12, 12') ansteuerbar sind,
**dadurch gekennzeichnet, dass** anhand der aktuellen bzw. ermittelten Position der landwirtschaftlichen Verteilmaschine mittels eines in der zumindest einen Datenverarbeitungseinrichtung hinterlegten Steuer- und/oder Regelungsprogramms jeweils eine Auswertung erfolgt, an welchen Stellen bzw. Positionen bereits eine Verteilung von Verteilgut erfolgt ist, und dass
mittels der einen Datenverarbeitungseinrichtung und Positionsbestimmungssystems die jeweiligen Teilbreiten der landwirtschaftlichen Verteilmaschine geschaltet werden, indem die jeweiligen Antriebseinheiten der wenigstens zwei Abschnitte der rotierenden Zellenwalze oder Dosierwalze gesteuert, insbesondere aktiviert oder deaktiviert, werden.

2. Dosiereinrichtung nach Anspruch 1, bei welcher die wenigstens zwei Abschnitte (32, 34) der rotierenden Zellenwalze oder Dosierwalze (12, 12') in zumindest einem Gehäuse (22) rotierend angeordnet sind und/oder rotierend gelagert sind.

3. Dosiereinrichtung nach Anspruch 1 oder 2, bei welcher die wenigstens zwei Abschnitte (32, 34) der rotierenden Zellenwalze oder Dosierwalze (12, 12') zumindest näherungsweise gleiche Abmessungen aufweisen und/oder ausbilden.

4. Dosiereinrichtung nach einem der vorherigen Ansprüche, bei welcher die wenigstens zwei Abschnitte (32, 34) der rotierenden Zellenwalze oder Dosierwalze (12, 12') jeweils eine Antriebswelle (20, 20') umfassen, deren Achsen fluchtend zueinander angeordnet und/oder ausgerichtet sind.

5. Dosiereinrichtung nach Anspruch 4, bei welcher den Antriebswellen (20, 20') der wenigstens zwei Abschnitte (32, 34) der rotierenden Zellenwalze oder Dosierwalze (12, 12') jeweils zumindest eine der Antriebseinheiten (18, 19) zugeordnet ist.

6. Dosiereinrichtung nach einem der vorherigen Ansprüche, bei welcher die Antriebseinheiten (18, 19) der wenigstens zwei Abschnitte (32, 34) der rotierenden Zellenwalze oder Dosierwalze (12, 12') jeweils unabhängig voneinander regelbar und/oder steuerbar ausgebildet sind.

7. Dosiereinrichtung nach einem der vorherigen Ansprüche, bei welcher jeweils die zumindest eine Antriebseinheit (18, 19) der wenigstens zwei Abschnitte (32, 34) der rotierenden Zellenwalze oder Dosierwalze (12, 12') eine unterschiedliche Drehrichtung aufweisen oder entgegengesetzt rotierbar ausgebildet sind.

8. Dosiereinrichtung nach einem der vorherigen Ansprüche, bei welcher zumindest eine der Antriebseinheiten (18, 19) der wenigstens zwei Abschnitte (32, 34) der rotierenden Zellenwalze oder Dosierwalze (12) einseitig abschaltbar ist.

9. Dosiereinrichtung nach einem der vorherigen Ansprüche, bei welcher die wenigstens zwei Abschnitte (32, 34) der rotierenden Zellenwalze oder Dosierwalze (12, 12') über zumindest eine Lagerwelle (36) miteinander verbunden und/oder gekoppelt sind.

10. Dosiereinrichtung nach einem der Ansprüche 4 bis 8 mit mindestens Anspruch 4, bei welcher die wenigstens zwei Abschnitte (32, 34) der rotierenden Zellenwalze oder Dosierwalze (12, 12') über zumindest eine Lagerwelle (36) miteinander verbunden und/oder gekoppelt sind, wobei die zumindest eine Lagerwelle (38) jeweils zwischen den freien Enden der Antriebswellen (20, 20') angeordnet ist, wobei eine Achse der zumindest einen Lagerwelle (38) zumindest näherungsweise fluchtend zu den Achsen der Antriebswellen (20, 20') angeordnet und/oder ausgerichtet ist.

11. Dosiereinrichtung nach einem der vorherigen Ansprüche, welche zumindest einen oberseitigen Einlass (28) und zumindest zwei unterseitige Ausgänge (30, 30') umfasst.

12. Dosiereinrichtung nach Anspruch 11, bei welcher die zumindest zwei Ausgänge (30, 30') getrennt und/oder separiert voneinander ausgebildet sind, wobei insbesondere den zumindest zwei Ausgängen (30, 30') jeweils eine Fallschleuse (44, 44') zugeordnet ist.

13. Landwirtschaftliche Verteilmaschine zum Ausbringen von granularem Verteilgut wie Saatgut oder Dünger, umfassend
wenigstens eine Speichereinheit zum Mitführen und Bereitstellen granulären Verteilgutes,
eine der wenigstens einen Speichereinheit zugeordnete und insbesondere an einem unteren Auslass der Speichereinheit angeordnete Dosiereinrichtung mit rotierender Zellenwalze oder rotierender Dosierwalze (12) zur Entnahme definierbarer Mengen an Verteilgut und/oder zur Eindosierung des Verteilgutes in eine Förderluftströmung, zumindest zwei Verteileinheiten, welche jeweils über ein Leitungssystem (42) mit der wenigstens einen Speichereinheit in Verbindung stehen, so dass die zumindest zwei Verteileinheiten jeweils mit Verteilgut der Speichereinheit gespeist und/oder versorgt werden, welches Verteilgut von der Förderluftströmung getragen und von der Speichereinheit zu den Verteileinheiten befördert wird,
wobei die zumindest zwei Verteileinheiten jeweils eine Vielzahl von Abgängen umfassen, mittels welcher das Verteilgut entsprechend den Abgängen aufgeteilt wird, und wobei die Abgänge der zumindest zwei Verteileinheiten jeweils in mindestens eine Saatleitung münden,
eine Mehrzahl von Säscharen zum Ausbringen der zu verteilenden Verteilgüter, wobei die mindestens eine Saatleitung der Abgänge jeweils in ein Säschar mündet,
wobei die rotierende Zellenwalze oder Dosierwalze (12, 12) der der Speichereinheit zugeordneten Dosiereinrichtung (10) gemäß einem der Ansprüche 1 bis 12 ausgeführt ist.

## Claims

1. A metering device (10) used to meter granular distribution goods, for example, seeds or fertilisers for an agricultural distribution machine, the metering device (10) being formed by a rotating cellular roller or metering roller (12, 12'),
wherein the rotating cellular roller or metering roller (12, 12') is at least two-part, wherein each of the at least two sections (32, 34) of the rotating cellular roller or metering roller (12, 12') ends in a separate connection line of a duct system (42) leading to two or more distribution units, wherein
each of the at least two sections (32, 34) of the rotating cellular roller or metering roller (12) has an own drive unit (18, 19) for an in each instance mutually independent drive speed control, and
at least one of the drive units (18, 19) has a data processing device and a positioning system assigned to it, such that the at least two sections (32, 34) of the rotating cellular roller or metering roller (12, 12') are in each instance controllable depending on the particular location coordinates or, as applicable, depending on the position,
**characterised in that** in each instance an analysis of the locations or, as applicable, of the positions where a distribution of distribution goods has already been carried out is performed on the basis of the current or, as applicable, determined position of the agricultural distribution machine by a control program and/or regulation program stored in the at least one data processing device, and **in that** the particular partial widths of the agricultural distribution machine are switched by the one data processing device and positioning system by the particular drive units of the at least two sections of the rotating cellular roller or metering roller being controlled, in particular, being activated or deactivated.

2. The metering device according to claim 1, in which the at least two sections (32, 34) of the rotating cellular roller or metering roller (12, 12') are rotatively arranged and/or rotatively mounted in at least one housing (22).

3. The metering device according to claim 1 or 2, in which the at least two sections (32, 34) of the rotating cellular roller or metering roller (12, 12') have and/or form at least approximately the same dimensions.

4. The metering device according to one of the previous claims, in which the at least two sections (32, 34) of the rotating cellular roller or metering roller (12, 12') in each instance comprise a drive shaft (20, 20'), the axes of which are arranged and/or oriented to be aligned with each other.

5. The metering device according to claim 4, in which the drive shafts (20, 20') of the at least two sections (32, 34) of the rotating cellular roller or metering roller (12, 12') in each instance have at least one of the drive units (18, 19) assigned to them.

6. The metering device according to one of the previous claims, in which the drive units (18, 19) of the at least two sections (32, 34) of the rotating cellular roller or metering roller (12, 12') are designed to be in each instance regulatable and/or controllable independently of each other.

7. The metering device according to one of the previous claims, in which in each instance the at least one drive unit (18, 19) of the at least two sections (32, 34) of the rotating cellular roller or metering roller (12, 12') has a different direction of rotation or is designed to be oppositely rotatable.

8. The metering device according to one of the previous claims, in which at least one of the drive units (18, 19) of the at least two sections (32, 34) of the rotating cellular roller or metering roller (12) is unilaterally deactivatable.

9. The metering device according to one of the previous claims, in which the at least two sections (32, 34) of the rotating cellular roller or metering roller (12, 12') are connected and/or coupled to each other via at least one bearing shaft (38).

10. The metering device according to one of the claims 4 to 8, including at least claim 4, in which the at least two sections (32, 34) of the rotating cellular roller or metering roller (12, 12') are connected and/or coupled to each other via at least one bearing shaft (38), wherein the at least one bearing shaft (38) is in each instance arranged between the free ends of the drive shafts (20, 20'), wherein an axis of the at least one bearing shaft (38) is arranged and/or oriented to be at least approximately aligned with the axes of the drive shafts (20, 20').

11. The metering device according to one of the previous claims, which comprises at least one top inlet (28) and at least two bottom outlets (30, 30').

12. The metering device according to claim 11, in which the at least two outlets (30, 30') are designed to be discrete and/or separate from each other, wherein, in particular, the at least two outlets (30, 30') in each instance have a fall lock (44, 44') assigned to them.

13. An agricultural distribution machine used to spread granular distribution goods, such as seeds or fertilisers, the agricultural distribution machine comprising at least one storage unit to carry along and supply granular distribution goods,
a metering device with a rotating cellular roller or a rotating metering roller (12) to withdraw definable quantities of distribution goods and/or to meter the distribution goods into a conveying air flow, the metering device being assigned to the at least one storage unit and, in particular, arranged at a bottom outlet of the storage unit,
at least two distribution units, which are in each instance connected to the at least one storage unit via a duct system (42), such that the at least two distribution units are in each instance fed and/or supplied with the distribution goods of the storage unit, which distribution goods are carried by the conveying air flow and are conveyed from the storage unit to the distribution units,
wherein the at least two distribution units in each instance comprise a multitude of outflows, by which the distribution goods are distributed corresponding to the outflows, and wherein the outflows of the at least two distribution units in each instance end in at least one seed tube,
a plurality of sowing coulters to spread the distribution goods to be distributed, wherein the at least one seed tube of the outflows in each instance ends in a sowing coulter, wherein the rotating cellular roller or metering roller (12, 12') of the metering device (10) assigned to the storage unit is designed according to one of the claims 1 to 12.

## Revendications

1. Dispositif de dosage (10) destiné à doser du matériau d'épandage sous forme de granulés tel que des semences ou engrais pour épandeur agricole, lequel dispositif de dosage (10) est constitué d'un rouleau alvéolé ou rouleau doseur rotatif (12, 12'),
ledit rouleau alvéolé ou rouleau doseur rotatif (12, 12') étant au moins en deux parties, chacune des au moins deux portions (32, 34) du rouleau alvéolé ou rouleau doseur rotatif (12, 12') débouchant dans un conduit de liaison séparé d'un système de conduites (42) amenant à deux ou plusieurs unités d'épandage,
chacune des au moins deux portions (32, 34) du rouleau alvéolé ou rouleau doseur rotatif (12) disposant d'une propre unité d'entraînement (18, 19) destinée à la commande de vitesses d'entrée indépendantes les unes des autres, et
un dispositif de traitement de données et un système de détermination de position étant associés à au moins une des unités d'entraînement (18, 19), de sorte que lesdites au moins deux portions (32, 34) du rouleau alvéolé ou rouleau doseur rotatif (12, 12') peuvent être respectivement pilotées en fonction de coordonnées géographiques respectives ou en fonction d'une position,
**caractérisé en ce que** grâce à la position actuelle ou déterminée de l'épandeur agricole, une analyse est effectuée respectivement à l'aide d'un programme de commande et/ou de régulation installé dans ledit au moins un dispositif de traitement de données, établissant à quels endroits ou positions un épandage de matériau d'épandage a déjà été effectué, et qu'à l'aide dudit un dispositif de traitement de données et système de détermination de position, les largeurs partielles respectives de l'épandeur agricole sont mises en route, **en ce que** les unités d'entraînement respectives des au moins deux sections du rouleau alvéolé ou rouleau doseur rotatif sont commandées, notamment activées ou désactivées.

2. Dispositif de dosage selon la revendication 1, dans lequel les au moins deux sections (32, 34) du rouleau alvéolé ou rouleau doseur rotatif (12, 12') sont agencés rotatifs et/ou montés rotatifs dans au moins un boîtier (22).

3. Dispositif de dosage selon la revendication 1 ou 2, dans lequel les au moins deux sections (32, 34) du rouleau alvéolé ou rouleau doseur rotatif (12, 12') présentent et/ou constituent au moins approximativement des mêmes dimensions.

4. Dispositif de dosage selon l'une quelconque des revendications précédentes, dans lequel lesdites au moins deux sections (32, 34) du rouleau alvéolé ou rouleau doseur rotatif (12, 12') comprennent respectivement un arbre de transmission (20, 20') dont les axes sont agencés et/ou dirigés dans le prolongement l'un de l'autre.

5. Dispositif de dosage selon la revendication 4, dans lequel au moins une des unités d'entraînement (18, 19) est associée respectivement aux arbres de transmission (20, 20') desdites au moins deux sections (32, 34) du rouleau alvéolé ou rouleau doseur rotatif (12, 12').

6. Dispositif de dosage selon l'une quelconque des revendications précédentes, dans lequel les unités d'entraînement (18, 19) desdites au moins deux sections (32, 34) du rouleau alvéolé ou rouleau doseur rotatif (12, 12') peuvent être régulées et/ou commandées respectivement indépendamment l'une de l'autre.

7. Dispositif de dosage selon l'une quelconque des revendications précédentes, dans lequel ladite au moins une unité d'entraînement (18, 19) respective desdites au moins deux sections (32, 34) du rouleau alvéolé ou rouleau doseur rotatif (12, 12') présentent un sens de rotation différent ou sont réalisés rotatifs dans le sens opposé.

8. Dispositif de dosage selon l'une quelconque des revendications précédentes, dans lequel au moins une des unités d'entraînement (18, 19) desdites au moins deux sections (32, 34) du rouleau alvéolé ou rouleau doseur rotatif (12) peut être arrêtée de manière unilatérale.

9. Dispositif de dosage selon l'une quelconque des revendications précédentes, dans lequel lesdites au moins deux sections (32, 34) du rouleau alvéolé ou rouleau doseur rotatif (12, 12') sont reliées et/ou couplées l'une à l'autre par le biais d'au moins un arbre de palier (38).

10. Dispositif de dosage selon l'une quelconque des revendications 4 à 8 avec au moins la revendication 4, dans lequel lesdites au moins deux sections (32, 34) du rouleau alvéolé ou rouleau doseur rotatif (12, 12') sont reliées et/ou couplées l'une à l'autre par le biais d'au moins un arbre de palier (38), ledit au moins un arbre de palier (38) étant agencé respectivement entre les extrémités libres des arbres de transmission (20, 20'), un axe dudit au moins un arbre de palier (38) étant agencé et/ou dirigé au moins approximativement dans le prolongement des axes des arbres de transmission (20, 20').

11. Dispositif de dosage selon l'une quelconque des revendications précédentes qui comprend au moins une admission supérieure (28) et au moins deux sorties sur face antérieure (30, 30').

12. Dispositif de dosage selon la revendication 11, dans lequel lesdites au moins deux sorties (30, 30') sont réalisées séparées et/ou séparées l'une de l'autre, un sas d'évacuation (44, 44') étant associé respectivement notamment auxdites deux sorties (30, 30').

13. Épandeur agricole destiné à l'épandage de matériau d'épandage sous forme de granulés tel que semences ou engrais, comprenant
au moins une unité de stockage pour le transport et la fourniture du matériau d'épandage sous forme de granulés,
un dispositif de dosage associé à ladite au moins une unité de stockage et agencé notamment à une sortie inférieure de l'unité de stockage, à rouleau alvéolé rotatif ou rouleau doseur rotatif (12) destiné à retirer des quantités définies de matériau d'épandage et/ou destiné à doser le matériau d'épandage dans un flux d'air de convoyage,
au moins deux unités d'épandage qui sont reliées respectivement par un système de conduites (42) à ladite au moins une unité de stockage de sorte que lesdites au moins deux unités d'épandage sont respectivement alimentées et/ou approvisionnées en matériau d'épandage de l'unité de stockage, ledit matériau d'épandage étant porté par le flux d'air de convoyage et transporté par l'unité de stockage aux unités d'épandage,
lesdites au moins deux unités d'épandage comprenant chacune une pluralité de sorties permettant de répartir le matériau d'épandage en fonction des sorties, et lesdites sorties desdites au moins deux unités d'épandage débouchant chacune dans au moins une conduite pour semences,
une pluralité de socs de semeur destinés à l'épandage des matériaux d'épandage à épandre, ladite au moins une conduite à semences des sorties débouchant respectivement dans un soc de semeur,
le rouleau alvéolé ou rouleau doseur rotatif (12, 12) du dispositif de dosage (10) associé à l'unité de stockage étant réalisé selon l'une quelconque des revendications 1 à 12.
